(19) Europäisches Patentamt
European Patent Office
Office européen des brevets

(11) Veröffentlichungsnummer: **0 342 575 A2**

# (12) EUROPÄISCHE PATENTANMELDUNG

(21) Anmeldenummer: **89108726.4**

(22) Anmeldetag: **16.05.89**

(51) Int. Cl.[4]: **C07F 9/30 , C07B 55/00**

(30) Priorität: **20.05.88 DE 3817191**

(43) Veröffentlichungstag der Anmeldung:
**23.11.89 Patentblatt 89/47**

(84) Benannte Vertragsstaaten:
**BE CH DE FR GB IT LI NL**

(71) Anmelder: **HOECHST AKTIENGESELLSCHAFT**
**Postfach 80 03 20**
**D-6230 Frankfurt am Main 80(DE)**

(72) Erfinder: **Schütze, Rainer, Dr.**
**Am Flachsland 54**
**D-6233 Kelkheim (Taunus)(DE)**
Erfinder: **Knorr, Harald, Dr.**
**Völklinger Weg 34**
**D-6000 Frankfurt am Main 71(DE)**

## (54) Verfahren zur Racemisierung von optisch aktiver D-2-N Phenacetylamino-4-methylphosphinobuttersäure.

(57) Die Erfindung betrifft ein Verfahren zur Racemisierung von D-2-N-Phenacetylamino-4-methylphosphinobuttersäure

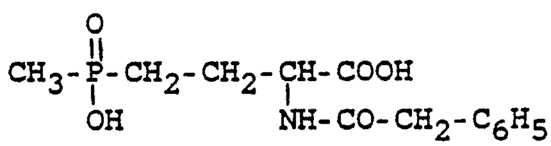

(I)

dadurch gekennzeichnet, daß die Racemisierung in Eisessig und in Gegenwart von Acetanhydrid durchgeführt wird.

Die Erfindung ermöglicht die wirtschaftliche Umwandlung eines wenig wirksamen Herbizids in das racemische Gemisch, welches die stark wirksame L-Form enthält. Letztere kann nach bekanntem Verfahren aus dem racemischen Gemisch abgetrennt werden.

EP 0 342 575 A2

## Verfahren zur Racemisierung von optisch aktiver D-2-N-Phenacetylamino-4-methylphosphinobuttersäure

DL-2-Amino-4-methylphosphinobuttersäure ist eine Aminosäure mit herbiziden Eigenschaften (DE-A 27 17 440, US-A-4,168,963), deren Ammoniumsalz unter der Bezeichnung Glufosinateammonium als Totalherbizid bekannt ist. Bei der Synthese entsteht sie als Racemat, dessen L-Form der Träger der herbiziden Wirksamkeit ist, während die enantiomere D-Form nur geringe Wirkung besitzt.

Nach einem bekannten Verfahren kann man die beiden enantiomeren Formen trennen, indem man das Racemat mit Phenylessigsäure acyliert und das Acylderivat mittels Enzymen enantioselektiv spaltet (DE-A 30 48 612, US-A-4,389,488). Dabei entsteht ein Gemisch aus der L-Aminosäure, Phenylessigsäure und D-2-Phenacetylamino-4-methylphosphinobuttersäure (I). Letztere kann man aus dem Produktgemisch isolieren, nach bekanntem Verfahren (DE-A 33 34 849, US-4,638,086) racemisieren und erneut der enzymatischen Spaltung zuführen. Die Racemisierung erfolgt dabei durch Erhitzen mit Phenylessigsäure in der Schmelze.

Überraschend wurde nun gefunden, daß sich (I) besonders gut mittels Essigsäure/Acetanhydrid racemisieren läßt.

Gegenstand der Erfindung ist somit ein Verfahren zur Racemisierung von D-2-N-Phenacetylamino-4-methylphosphinobuttersäure

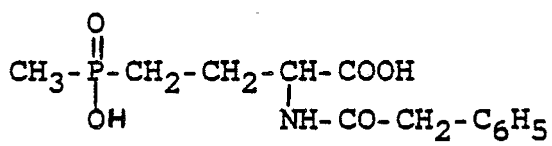

(I)

das dadurch gekennzeichnet ist, daß die Racemisierung in Eisessig und in Gegenwart von Acetanhydrid durchgeführt wird.

Die Racemisierung von optisch aktiven N-Acylaminosäuren in Essigsäure/Acetanhydrid ist zwar bereits bekannt (DE-A 19 63 991 (US-A-3,796,750), 29 39 269 (GB-2031896), 34 35 095 (US-A-4602096) und GB-A 13 69 462), jedoch wird bei diesen Verfahren stets vom Acetylderivat statt vom Phenacetylderivat ausgegangen. Es war nicht zu erwarten, daß die Reaktion mit dem N-Phenacetylderivat der 2-Amino-4-methylphosphinobuttersäure so glatt verläuft; vielmehr war zu vermuten, daß bei der Reaktion eine Umacylierung, d.h. der Austausch des Phenacetylrestes gegen den Acetylrest, erfolgt. Derartige Umacylierungen sind aus anderen Systemen literaturbekannt (A.G.M. Barret, J. Chem. Soc. Perkin Trans. I, 1979, 6, 1629 und J. Fluorine Chem. 3, 167 (1973/74)).

Die Phosphinsäurefunktion reagiert überraschenderweise ebenfalls nicht. Normalerweise wird die Maskierung reaktiver Gruppen in seitenkettenfunktionalisierten Aminosäurederivaten empfohlen (J.P. Greenstein und M. Winitz, Chemistry of the amino acids, S. 980, Wiley and Sons, New York (1961)).

Eine Zweitacylierung mittels Acetanhydrid, wie sie für Amide beschrieben ist (Houben-Weyl VIII, S. 709), findet ebenfalls nicht statt.

Die erforderliche Menge Acetanhydrid beträgt mindestens 1 Gewichtsprozent, bezogen auf 1, und liegt bevorzugt bei 1 bis 20 Gew.-%, insbesondere bei 5 bis 15 Gew.-%. Auch größere Anteile an Acetanhydrid lassen sich ohne Verschlechterung der Ausbeute verwenden (sogar in reinem Acetanhydrid läßt sich das Verfahren durchführen), doch ist es aus Kostengründen vorteilhaft, nicht mehr Acetanhydrid als nötig zu verwenden. Das Verhältnis Essigsäure : I liegt vorzugsweise im Bereich von ca. 2,5:1 bis 10:1 (Gewicht/Gewicht). Die Reaktionstemperatur liegt vorzugsweise zwischen 20 und 150 °C, insbesondere bei 90 bis 115 °C.

Die Racemisierung läuft vorzugsweise bei Normal- oder leichtem Überdruck (unter 2 bar) je nach Temperatur innerhalb von 1 bis 120 min, im Vorzugsbereich innerhalb von 5 bis 30 min ab.

Das Verfahren kann sowohl kontinuierlich (z.B. in einem Strömungsrohr, Extruder oder in einer Kaskade) als auch diskontinuierlich durchgeführt werden.

Das erfindungsgemäße Verfahren bietet gegenüber dem bekannten Verfahren gemäß DE-A 33 34 849 (US-A-4,638,086) den Vorteil, daß man mit niedrigeren Reaktionstemperaturen auskommt und statt Phenylessigsäure die billigere und niedriger siedende Essigsäure verwenden kann. Außerdem muß nicht in der Schmelze gearbeitet werden.

Der Einsatz katalytischer Mengen (1 bis 15 Gew.-% bezogen auf I) Acetanhydrid ist ein weiterer Vorteil im Hinblick auf die Wirtschaftlichkeit des Verfahrens.

Das erfindungsgemäße Verfahren wird durch folgende Beispiele erläutert:

**Beispiel 1**

10 g D-2-N-Phenacetylamino-4-methylphosphinobuttersäure werden in 30 ml Essigsäure (99,8 %) suspendiert und unter Rühren auf 115° C erwärmt. Man fügt 1 g Acetanhydrid hinzu und läßt noch 30 min bei 115° C rühren. Nach Abkühlen auf 50° C destilliert man die Essigsäure bei 26,7 mbar ab. Die abdestillierte Essigsäure ist für die Racemisierung erneut verwendbar. Auf das zurückbleibende Öl gibt man 50 ml Wasser und rührt 15 min bei Raumtemperatur. Anschließend zieht man das Wasser bei 60° C und 26,7 mbar ab.

Man erhält 9,58 g (96 % d.Th.) D,L-2-N-Phenacetylamino-4-methylphosphino-buttersäure.

Die chemische Reinheit des Ausgangsmaterials und des racemisierten Produktes waren mit 98 % identisch.

**Beispiel 2**

Man verfährt wie in Beispiel 1 beschrieben, setzt jedoch 2 g Acetanhydrid hinzu und rührt 2 h bei 90° C. NachAufarbeitung wie in Beispiel 1 erhält man 9,5 g (95 % d. Th.) D,L-2-N-Phenacetylamino-4-methylphosphinobuttersäure.

**Beispiel 3**

Man verfährt wie unter Beispiel 1 beschrieben, setzt jedoch 0,5 g Acetanhydrid hinzu und erwärmt im geschlossenen Gefäß auf 130° C, rührt 30 min bei dieser Temperatur unter Überdruck und läßt dann abkühlen. Nach Aufarbeitung entsprechend Beispiel 1 erhält man 9,53 g (95;3 % d. Th.) D,L-2-N-Phenacetylamino-4-methylphosphino-buttersäure.

**Ansprüche**

1. Verfahren zur Racemisierung von D-2-N-Phenacetylamino-4-methylphosphinobuttersäure

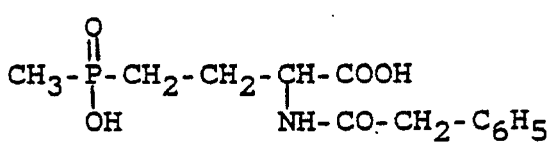

(I)

dadurch gekennzeichnet, daß die Racemisierung in Eisessig und in Gegenwart von Acetanhydrid durchgeführt wird.

2. Verfahren nach Anspruch 1, dadurch gekennzeichnet, daß der Anteil an Acetanhydrid, bezogen auf Verbindung der Formel I mindestens 1 Gewichtsprozent beträgt.

3. Verfahren nach Anspruch 1, dadurch gekennzeichnet, daß der Anteil an Acetanhydrid 1 bis 20 Gew.-%, bezogen auf Verbindung der Formel I, beträgt.

4. Verfahren nach Anspruch 1, dadurch gekennzeichnet, daß der Anteil an Acetanhydrid, bezogen auf Verbindung der Formel I 5 bis 15 Gew.-% beträgt.

5. Verfahren nach einem der Ansprüche 1 bis 4, dadurch gekennzeichnet, daß man die Racemisierung zwischen 20 und 150° C durchführt.

6. Verfahren nach einem der Ansprüche 1 bis 4, dadurch gekennzeichnet, daß man die Racemisierung bei 90 bis 115° C durchführt.

7. Verfahren nach einem oder mehreren der Ansprüche 1 bis 5, dadurch gekennzeichnet, daß das Gewichtsverhältnis von Eisessig zu Verbindung der Formel I 2,5:1 bis 10:1 beträgt.

8. Verfahren nach einem oder mehreren der Ansprüche 1 bis 6, dadurch gekennzeichnet, daß die Racemisierung bei Normaldruck bis zu einem Druck von 2 bar durchgeführt wird.

9. Verfahren nach einem oder mehreren der Ansprüche 1 bis 7, dadurch gekennzeichnet, daß die Racemisierung innerhalb von 1 bis 120 min abläuft.

10. Verfahren nach Anspruch 8, dadurch gekennzeichnet, daß die Racemisierung innerhalb von 5 bis 30 min abläuft.